# EUROPEAN PATENT APPLICATION

(11) **EP 2 088 756 A1**
(43) Date of publication of application: **12.08.2009**
(21) Application number: 07846156.3
(22) Date of filing: 26.12.2007
(51) Int. Cl.: H04M 3/42

(54) **SYSTEM, DEVICE AND METHOD FOR CARRYING OUT ROUTING MODE BASE ON STRATEGY**

(30) Priority: 27.12.2006 CN 200610167316
(71) Applicant: Huawei Technologies Co., Ltd., Shenzhen, Guangdong Province 518129 (CN)
(72) Inventor: ZOU, Zhuyan, Guangdong Province 518129 (CN)
(74) Representative: Pfenning, Meinig & Partner GbR
(86) International application number: PCT/CN2007/071330
(87) International publication number: WO 2008/083585

(57) **Abstract**

A system, device and method for carrying out routing mode based on strategy are provided; the system in this invention contains database, for storing multiple routing strategies set by user, and storing one of the routing strategy as current routing strategy; communication server, inquiring current routing strategy of the user in the database in calling process, and implementing calling based on current routing strategy. The system also contains Web server, which receives multiple routing strategies of user, and sends them to the database. This invention carries out that the user relies on multiple strategies to guide system to flexibly select routing calling through the different user attributives as routing strategy evidences, which reaches the aim of enriching uniform communication service content and improving uniform communication service quality.

## Description

### Field of the Disclosure

The present invention relates to the technical field of communications, and in particular, to the technical field of Unified Communication (UC).

### Background

UC is a communication solution for realizing the unification and simplification of various communications using Session Initiation Protocol (SIP) and mobility. In UC, multiple telephones (such as mobile phone, PHS phone and fixed phone, etc.) and devices commonly used by a user are bound with a plurality of networks, thus UC will not be affected by the location, time or device. By using UC service, users may communicate with each other at any moment and use various terminal equipments as they like.

At present, a service mode usually employed in the existing UC is to make a call according to time policy. In other words, a user provides a contact mode according to his/her own timetable, and the system finds the user according to the time spans predefined by the user and establishes a call.

For example, the following table is a time arrangement of a certain user. The user selects the corresponding contact mode according to his/her own time arrangement. Thus, when the user is called in different time spans, the system will select the corresponding contact mode according to the time policy set by the user and establish a call according to the contact mode.

| **Time Span** | **Contact Mode** | **Remark** |
|---|---|---|
| 00:00 - 07:30 | NA | Time for sleep, do not disturb |
| 07:30 - 08:30 | Mobile Phone Number | On the way to work, please dial my mobile phone number |
| 08:30 - 12:00 | Office Telephone Number | Working time, please dial my office telephone |
| 12:00 - 13:00 | Mobile Phone Number | Time for lunch, please dial my mobile phone number |
| 13:00 - 18:00 | Office Telephone Number | Working time, please dial my office telephone |
| 18:00 - 19:00 | Mobile Phone Number | On the way back from work, please dial my mobile phone number |
| 19:00 - 24:00 | Home Telephone Number | Off-duty time, please dial my home number |

In such a service mode, because the user can only select the contact mode according to time policy and there is only one contact mode in each time span, the service content is not abundant enough and it is not applicable for many situations.

### Summary

In view of the above problems in the prior art, it is an object of the embodiments of the invention to provide a system, a device and a method for realizing policy-based routing mode. By taking different attributes of a user as the basis for routing decision, a user may guide the system to flexibly select a routing according to a plurality of policies, so that the object of enriching UC service content and improving QoS of UC may be attained.

The object of the embodiments of the invention is realized by the following technical solutions.

An embodiment of the invention provides a system for realizing policy-based routing mode, including:

a database adapted to store a plurality of routing policies preset by a user and store one of the plurality of routing policies as the current routing policy; and

a communication server adapted to query the current routing policy of the user from the database and establish a call according to the current routing policy during a calling process.

Another embodiment of the invention provides a communication server, including:

a service control point adapted to send information on a calling party and a called party to a policy engine, then receive a routing mode list returned by the policy engine, and establish a call according to the routing mode list; and

the policy engine adapted to query a routing policy saved in a database according to the information on the calling party and the called party, obtain a routing mode list by resolving the routing policy obtained, and send the routing mode list to the service control point.

Another embodiment of the invention provides a method for realizing policy-based routing mode, including:

storing routing policies preset by a user and storing one of the routing policies as the current routing policy; and

querying the current routing policy of the user and establishing a call according to the current routing policy during a calling process.

It may be seen from the above technical solutions of the invention that, in the system, device and method for realizing policy-based routing mode, by taking different attributes of a user as the basis for routing decision, a user may guide the system to flexibly select a routing according to a plurality of policies, so that the object of enriching UC service content and improving QoS of UC may be attained.

### Brief Description of the Drawings

Figure 1 is a first diagram showing networking of a system according to an embodiment of the invention;

Figure 2 is a second diagram showing networking of a system according to an embodiment of the invention;

Figure 3 is a first diagram showing the structure of a communication server according to an embodiment of the invention;

Figure 4 is a second diagram showing the structure of a communication server according to an embodiment of the invention; and

Figure 5 is a flow chart showing a method according to an embodiment of the invention.

### Detailed Description of the Disclosure

The embodiments of the invention provide a system, a device and a method for realizing policy-based routing mode. By taking different attributes of a user as the basis for routing decision, the user may guide the system to flexibly select a routing for calling according to a plurality of policies.

Specifically, the system for realizing policy-based routing mode according to an embodiment of the invention may include a database, a communication server and a Web server.

The database is adapted to save a plurality of routing policies preset by a user and one of the plurality of routing policies is taken as the current routing policy.

Specifically, the user may configure and manage his/her own routing policy via a browser (such as IE) or a communication client. For example, the user may customize a plurality of routing policies, including time-based routing policy, location-based routing policy, group-based routing policy and presence-based routing policy, etc., select one of the plurality of routing policies as the current routing policy, and then store these routing policies in a database.

The communication server is adapted to query the current routing policy of the user from the database and establishes a call according to the current routing policy during a calling process.

The communication server may be further adapted to store the routing policies preset by the user, which are received by the Web server via the communication client or browser, into the database.

The communication server is a core network entity for accomplishing call control and intelligently selecting a routing based on a policy.

The Web server is adapted to receive the routing policies preset by the user and to store the routing policies in the database.

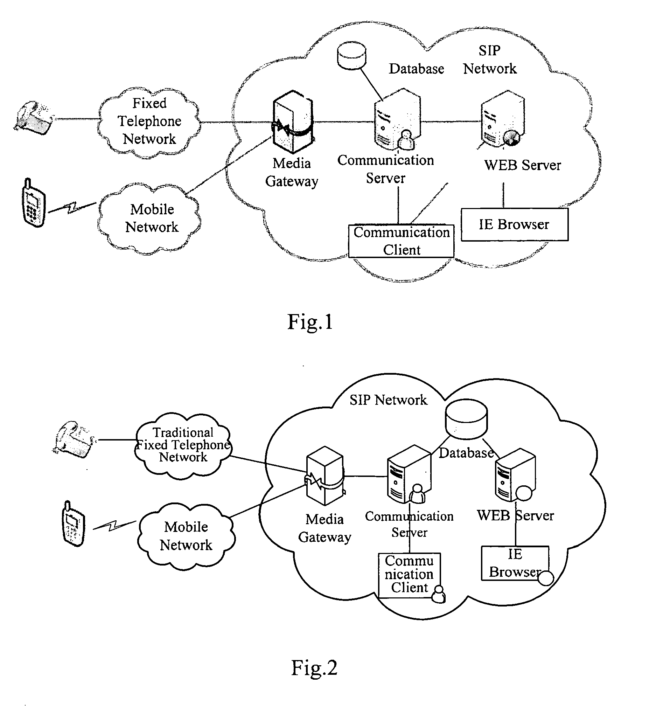

The Web server may store the received routing policies of the user into the database via the communication server. At this point, the networking mode of the system may be as shown in Figure 1.

Alternatively, the Web server may directly store the received routing policies of the user into the database. At this point, the networking mode of the system may be as shown in Figure 2.

Specifically, the user may configure and manage his/her own routing policy via a browser (such as IE) or a communication client, customize various intelligent routing mode, and then send these policies to the Web server. The Web server sends these policies to the communication server, and the communication server stores these policies into the database, or the Web server directly stores these policies customized by the user into the database.

In the specific realization process of the system for realizing policy-based routing mode according to the embodiment of the invention, to optimize the query efficiency of the database, the communication server or the Web server may convert the routing policy customized by the user into policy text format and then store it in the database.

It may be understood that the system for realizing policy-based routing mode according to the embodiment of the invention may also store the routing policy customized by the user into the database in other modes, for example, using an associated data table.

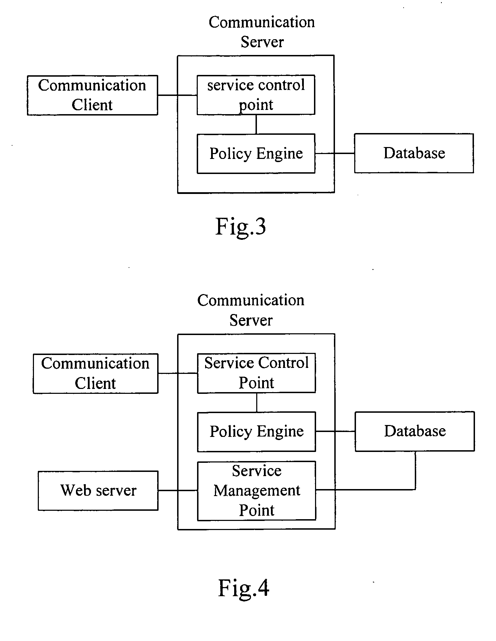

The communication server according to the embodiment of the invention is as shown in Figure 3, which may specifically include a service control point and a policy engine.

The service control point is adapted to send information on a calling party and a called party to the policy engine, then to receive a routing mode list returned by the policy engine, and to route the communication terminal equipments of the called user in turn or simultaneously according to the routing mode list.

The policy engine is adapted to query the routing policies saved in the database according to the information on the calling party and the called party, to resolve the queried routing policies, and to send the resolved routing mode list to the service control point.

Specifically, during the process in which a call is established between a calling party and a called party, the service control point sends the obtained information on the calling party and the called party to the policy engine. The policy engine queries the routing policies saved in the database according to the information on the calling party and the called party, resolves the queried routing policies, and sends the resolved routing mode list to the service control point. The service control point routes the communication terminal equipments of the called user in turn or simultaneously according to the routing mode list, and thus an intelligent call may be accomplished.

In the system for realizing policy-based routing mode according to the embodiment of the invention, the communication terminal equipment may specifically include a mobile telephone, a fixed telephone, etc.

It should be noted that, if the system for realizing policy-based routing mode according to the embodiment of the invention employs the networking mode as shown in Figure 1, that is, when the Web server stores the received routing policy customized by the user into the database via the communication server, as shown in Figure 4, the communication server may further include:

a service management point adapted to receive a routing policy sent from the Web server in formatted text form, convert the routing policy according to policy text semantic, and send the converted policy text to the database.

Specifically, the user may customize his/her own routing policy via a communication client or a browser (such as IE) and forward the customized routing policy to the service management point via the Web server. The service management point receives the routing policy from the Web server, converts the routing policy customized by the user, and stores the converted policy text, which may be searched by the policy engine, into the database.

The semantic format of the policy text is as follows:

Policy Number CRLF routing sequence 1|Routing Sequence 2|Routing Sequence 3|Routing Sequence 4|... CRLF END; The policy Number is as shown in the following table.

| **No.** | **Meaning** | **Remark** |
|---|---|---|
| 1 | "1" represents time-based policy (Time Policy) | N/A |
| 2 | "2" represents presence-based policy (Presence Policy) | N/A |
| 3 | "3" represents group-based policy (Group Policy) | N/A |
| 4 | "4" represents location-based policy (Location Policy) | N/A |

CRLF represents a blank space;

Routing Sequence n: office telephone -> conference room telephone -> key man telephone -> mobile phone -> home telephone (0571-81959870->0571-81959820 ->0571-81959830->13056935936), and the sequences are separated by "|".

END represents a text end mark.

Accordingly, the form of a complete policy text is as follows: "1 |13456935936->key man telephone |0571-81959870->conference room telephone ->13456935936|13456935936->key man telephone |0571-81959870->13456935936| 13456935936->key man telephone |0571-25346635 END".

An embodiment of the invention further provides a method for realizing policy-based routing mode. According to the method, a database stores a plurality of routing policies preset by a user and one of the plurality of routing policies is taken as the current routing policy. During a calling process, a communication server queries the routing policy of the user from the database and establishes a call according to the current routing policy of the user.

Specifically, the user may input his/her own routing policy via a browser or a communication client. For example, the system provides four routing policies, and the user may designate some or all of the routing policies as the mode used in the Unified Communication and then select one of the routing policies as the current routing policy according to his/her own situation. In the subsequent process, the designated routing policies and the current routing policy may be modified at any moment as required. The user sends the designated routing policies and the current routing policy to the Web server via a browser or a communication client. The Web server receives the routing policy of the user, and stores the routing policy into the database via the communication server, or directly sends and stores the routing policy into the database. The system returns a policy customization success code.

The routing policy in the embodiment of the invention includes:

Time-Based Routing Policy: A user customizes his/her own intelligent routing mode according to different time spans, as shown in the following table:

| **Time Span** | **Contact Mode** | **Remark** |
|---|---|---|
| 00:00 - 07:30 | Forwarded to voice mail box | Time for sleep, do not disturb; all incoming calls will be forwarded to voice mail box |
| 07:30 - 08:30 | 13456935936->Key man Telephone | On the way to work, please dial my mobile phone number; if the signal is weak, please forward the call to key man (i.e., the person answering the phone for the user) telephone |
| 08:30 - 12:00 | 0571-81959870->Conference Room Telephone ->13456935936 | Working time, please dial my office telephone; if I am absent, please dial conference room telephone; if I am absent again, please dial my mobile phone |
| 12:00 - 13:00 | 13456935936->Key man Telephone | Time for lunch, please dial my mobile phone number; if I forget to bring my mobile phone occasionally, please dial key man telephone |
| 13:00 - 18:00 | 0571-81959870->13456935936 | Working time, please dial my office telephone, and my mobile phone in the next place |
| 18:00 - 19:00 | 13456935936->Key man Telephone | On the way back from work, please dial my mobile phone number; if the signal is weak, please forward the call to key man telephone |
| 19:00 - 24:00 | 0571-25346635->Forwarded to voice mail box | Off-duty time, please dial my home number; if I am out, please forward to voice mail box |

Presence-based routing policy: The system calls a user intelligently according to different state presence of the user. For example, the user may predefine the following states:

Online: idle, busy, in conference, dining, on errands, calling;

Offline: Offlline.

Group-Based Routing Policy: A user is called intelligently according to the group to which the calling user pertains. For example, the user may predefine several groups, including Colleague, Friend, Leader, Subordinate, Customer, Supplier, Classmate, and other.

Location-based routing policy: A routing is selected intelligently according to the current location of the user. Three locations (local city/inland/abroad) are predefined.

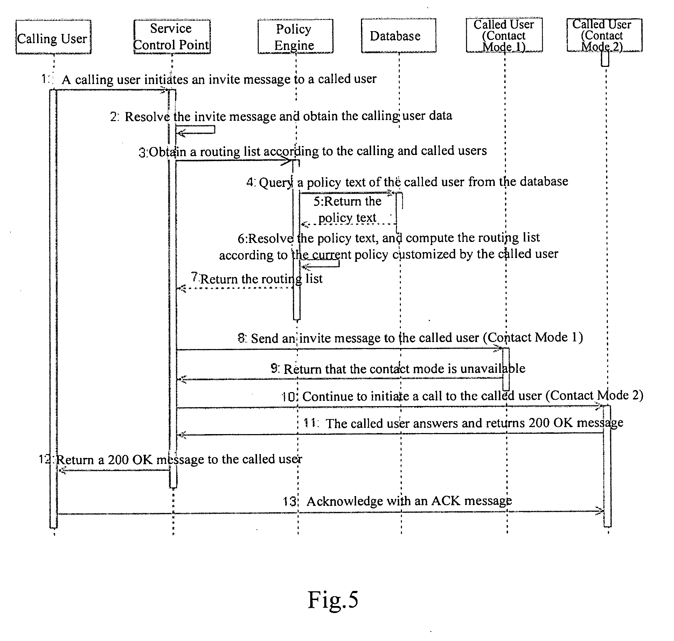

Hereinafter, taking such a case as an example that a user has two communication terminal equipments, respectively for use in contact mode 1 and contact mode 2, and employs SIP and a Web server stores the routing policy customized by the user via a communication server, the specific process of a method for realizing policy-based routing mode according to an embodiment of the invention will be described in detail in conjunction with Figure 5.

Steps 1-3: A calling user initiates a call, and a call message is routed to a service control point; the service control point resolves the call message, obtains the information on the calling user and the called user, and delivers the information on the calling user and the called user to a policy engine;

Steps 4-7: The policy engine queries the routing policy data from the database according to the information on the calling user and the called user, resolves the policy text and computes a routing mode list, and then returns the routing mode list to the service control point;

Steps 7-13: The service control point establishes a call according to the priority in the routing mode list, and first calls contact mode 1; if contact mode 1 responds to the call, it returns 200 OK and establishes the call; if contact mode 1 does not respond to the call, it returns that the contact mode is unavailable, and starts to call contact mode 2; if contact mode 2 responds to the call, it returns 200 Ok, establishes a call and acknowledges with an ACK message; if contact mode 2 does not respond to the call, either, then the call fails, and the system makes preparations for the next call.

The above embodiments of the invention have been described by taking time-based routing policy, location-based routing policy, presence-based routing policy and group-based routing policy as an example. Moreover, a combination of some or all of the above routing policies may be used, or the location-based routing policy, presence-based routing policy and group-based routing policy may be used independently.

In addition, those skilled in the art may understand that, a corresponding routing policy may also be customized according to other attributes of the calling and called users, such as QOS (Quality of Service), charge rate or the like. This routing policy is the same as the above presence-based routing policy and location-based routing policy, except that the system determines how to route intelligently according to QOS or the traffic of the called user (if the charge rate of the mobile phone is high, the fixed telephone may be used).

The descriptions above are merely the preferred embodiments of the invention, and the invention is not limited thereto. Various changes and substitutions, which will be conceived easily by those skilled in the art within the technical scope disclosed by the invention, should be covered within the protection scope of the invention. Accordingly, the protection scope of the invention should be defined by the appended claims.

## Claims

1. A system for realizing policy-based routing mode, comprising:
a database adapted to store a plurality of routing policies preset by a user, wherein one of the plurality of routing policies is taken as the current routing policy; and
a communication server adapted to query the current routing policy of the user from the database and establish a call according to the current routing policy during a calling process.

2. The system according to claim 1, further comprising:
a Web server adapted to receive the routing policies preset by the user and send the routing policies to the database.

3. The system according to claim 1, wherein the Web server sends the received routing policies to the database or forwards the received routing policies to the database via the communication server.

4. A communication server, comprising a service control point and a policy engine, wherein:
the service control point is adapted to send information on a calling party and a called party to the policy engine, receive a routing mode list returned by the policy engine, and establish a call according to the routing mode list; and
the policy engine is adapted to query a routing policy saved in a database according to the information on the calling party and the called party, obtain a routing mode list by resolving the queried routing policy, and send the routing mode list to the service control point.

5. The communication server according to claim 4, further comprising:
a service management point adapted to store the routing policies preset by a user, after format conversion, into the database.

6. A method for realizing policy-based routing mode, comprising:
storing routing policies preset by a user and storing one of the routing policies as the current routing policy; and
querying the current routing policy of the user and establishing a call according to the current routing policy during a calling process.

7. The method according to claim 6, wherein the storing routing policies preset by a user comprises:
storing the routing policies preset by the user after converting the routing policies into policy texts according to policy text semantic.

8. The method according to claim 7, wherein the storing routing policies preset by a user further comprises:
presetting, by the user, a plurality of routing policies via a browser or a communication client, selecting one of the plurality of routing policies as the current routing policy, and then sending the plurality of routing policies to a Web server.

9. The method according to claim 6, wherein the establishing a call according to the current routing policy comprises:
querying the routing policies saved in the database according to information on a calling party and a called party, resolving the queried routing policies, and obtaining a routing mode list; and
establishing a call according to the routing mode list.

10. The method according to any one of claims 6-9, wherein the routing policy comprises time-based routing policy, presence-based routing policy, group-based routing policy and location-based routing policy.
